# EUROPÄISCHE PATENTSCHRIFT

(11) **EP 2 412 469 B1**
(45) Veröffentlichungstag und Bekanntmachung des Hinweises auf die Patenterteilung: **09.09.2015**
(21) Anmeldenummer: 11173851.4
(22) Anmeldetag: 13.07.2011
(51) Int. Cl.: B23K 11/02, F01D 5/34

(54) **Integral beschaufelter Rotor mit geschweissten Schaufeln an der Scheibe aus TI6242 and Ti6246 ; Verfahren zur Herstellung eines solchen Rotors Verdichter und Gasturbine mit einem solchen Rotor**
Bladed disc with welded blades on the disc made in Ti6242 and Ti6246 ; Method of manufacturing such bladed disc and compressor and gas turbine with such disc
Disque aubagé avec aubes soudées sur le disque en Ti6242 et Ti6246 ; Méthode de fabrication d'un disque aubagé et compresseur haute pression et turbine à gaz comprenant un tel disque aubagé

(30) Priorität: 28.07.2010 DE 102010032464
(43) Veröffentlichungstag der Anmeldung: 01.02.2012
(73) Patentinhaber: MTU Aero Engines AG, 80995 München (DE)
(72) Erfinder: Klemm, Marcus, 82110 Germering (DE); Gindorf, Alexander, 85247 Schwabhausen (DE)

(56) Entgegenhaltungen:
- DE-A1- 19 831 736
- US-A- 5 551 840
- US-A1- 2003 000 602
- US-A1- 2006 034 695
- US-A1- 2009 265 933
- US-A1- 2009 290 985

## Beschreibung

Die Erfindung betrifft einen integralen beschaufelten Rotor und ein Verfahren zur Herstellung eines integral beschaufelten Rotors gemäß dem Oberbegriff der Ansprüche 1 und 5 (siehe, z.B., US 2003/000602 A).

### STAND DER TECHNIK

Verdichter von Gasturbinen und insbesondere Flugtriebwerken dienen zur Verdichtung der angesaugten Luftmengen, die in der Brennkammer zusammen mit dem Brennstoff verbrannt werden. In heutigen Triebwerken werden hierbei Verdichtungsverhältnisse von über 30 zu 1 erzielt, wobei verschiedene Stufen der Verdichter eingesetzt werden, nämlich Nieder- und Hochdruckverdichter. Diese Verdichter weisen eine Vielzahl hintereinander angeordneter Verdichterlaufräder bzw. Rotoren auf, die sehr schnell zwischen feststehenden Leitschaufeln rotieren. Die Verdichterlaufräder werden über von der Turbine angetriebene Wellen bewegt und umfassen jeweils eine Scheibe und eine Vielzahl von Schaufeln, die an der Scheibe angeordnet sind.

Um die Randbelastung der Scheibe durch Vermeidung zusätzlicher Verbindungsbauteile zwischen Scheibe und Schaufel, wie Schaufelfüße und Scheibennuten, zu vermeiden und eine entsprechende Gewichtseinsparung zu erzielen, ist es im Stand der Technik bekannt, so genannte Blisken einzusetzen, die auch als integral beschaufelte Rotoren bezeichnet werden können. Der Begriff Blisk setzt sich zusammen aus den Worten Blade (Schaufel) und Disc (Scheibe) und soll aussagen, dass die Schaufeln integral auf der Scheibe angeordnet sind. Darüber hinaus sind auch sogenannte Blings bekannt, wobei das Wort Bling für Bladed Ring steht, wobei entsprechend der Blisk die Schaufeln integral auf einem entsprechenden Ring angeordnet sind. Nachfolgend sollen für den Zweck der vorliegenden Beschreibung unter dem Begriff Blisk auch entsprechende Bauteile, die mit der Bezeichnung Bling versehen werden könnten, verstanden werden.

Die integrale Beschaufelung der Blisks hat den Nachteil, dass die Werkstoffauswahl und Gefügeeinstellung der Schaufeln und der Scheibe durch die möglichen Herstellungsverfahren beschränkt ist. Hierbei gibt es Beschränkungen dahingehend, dass durch entsprechende Fügeverfahren die Werkstoffe und deren Mikrostruktur in ungünstiger Weise verändert werden könnten oder dass aufgrund der konstruktiven Vorgaben bestimmte Fügeverfahren nicht zur Verfügung stehen. Dies gilt insbesondere für Blisks die im Hochdruckverdichter eingesetzt werden sollen, da im Hochdruckverdichter Rotoren zum Einsatz kommen, die sehr viele Schaufeln mit geringer Schaufellänge, also geringer radialer Dimension (betrachtet in Bezug auf die Blisk), aufweisen. Dadurch sind beispielsweise Schweißverfahren zum Verschweißen der Schaufeln mit den Scheiben, wie sie bei anderen Rotoren eingesetzt werden können, für Blisken im Hochdruckverdichter nicht anwendbar. Beispiele hierfür sind lineares Reibschweißen oder induktives Pressschweißen, bei welchen durch eine Induktionsspule die Fügeflächen erwärmt und aufgeschmolzen werden.

Gleichwohl gibt es auch für Blisken, die im Hochdruckverdichter eingesetzt werden sollen, den Bedarf unterschiedliche Werkstoffe für Schaufeln und Scheiben einzusetzen. Insbesondere für Titanwerkstoffe, die für die Herstellung von Blisken für Hochdruckverdichter eingesetzt werden, besteht der Bedarf, eine Anpassung des Eigenschaftsprofils für die Schaufeln und die Scheiben getrennt vornehmen zu können.

Die Dokumente US 2003/000602 A1,, US 2009/0265933 A1, US 2006/0034695 A1, DE 19831736 A1 und die US 5,551,840 beschreiben Rotoren für Gasturbinen oder Flugtriebwerke, die teilweise integral beschaufelt sind und/oder aus Titanlegierungen gebildet sind.

### OFFENBARUNG DER ERFINDUNG

### AUFGABE DER ERFINDUNG

Es ist deshalb Aufgabe der vorliegenden Erfindung einen entsprechenden integral beschaufelten Rotor sowie ein Verfahren zur Herstellung derselben bereitzustellen, bei dem eine optimale Auslegung der Eigenschaften von Schaufeln und Scheiben von Laufrädern im (Hochdruck-)Verdichter möglich ist. Insbesondere sollen entsprechende Blisken einfach herstellbar bzw. ein entsprechendes Verfahren zur Herstellung einfach anwendbar sein.

### TECHNISCHELÖSUNG

Diese Aufgabe wird gelöst durch einen Rotor mit den Merkmalen des Anspruchs 1 sowie ein Verfahren zur Herstellung einer Blisk mit den Merkmalen des Anspruchs 5 und einen Verdichter und einer Gasturbine mit den Merkmalen der Ansprüche 4 und 6 Vorteilhafte Ausgestaltungen sind Gegenstand der abhängigen Ansprüche.

Die Erfindung geht aus von einer Blisk aus einer Scheibe und einer Vielzahl von Schaufeln, die an der Scheibe angeordnet sind, für den (Hochdruck-)Verdichter einer Gasturbine, wobei die Scheibe und/oder die Schaufeln aus einem Titanwerkstoff gebildet sind, und zwar dem Titanwerkstoff Ti-6246 oder Ti-6242. Der Titanwerkstoff Ti-6246 weist eine chemische Zusammensetzung auf, die 6 Gew.-%Aluminium, 2 Gew.-%Zinn, 4 Gew.-%Zirkon und 6 Gew.-% Molybdän sowie Rest Titan und unvermeidbare Verunreinigungen umfasst. Der Titanwerkstoff Ti-6242 weist eine Zusammensetzung mit 6 Gew.-% Aluminium, 2 Gew.-%Zinn, 4 Gew.-% Zirkon, 2 Gew.-% Molybdän und Rest Titan sowie unvermeidbaren Verunreinigungen auf. Diese Werkstoffe haben sich insbesondere für Laufräder bzw. Rotoren im Hochdruckverdichter einer Gasturbine und insbesondere eines Flugtriebwerks als vorteilhaft erwiesen. Gemäß der Erfindung wird eine entsprechende Blisk für einen Hochdruckverdichter mit einer Scheibe und einer Vielzahl von Schaufeln gebildet, bei denen Scheibe und Schaufel sich in ihrer chemischen Zusammensetzung der Werkstoffe und/oder der Mikrostruktur ihres Gefüges unterscheiden. Damit lässt sich ein optimales Eigenschaftsprofil der Blisk mit einzeln angepassten Eigenschaften der Scheibe und der Schaufeln erzielen.

Hierbei können die Scheibe aus dem Werkstoff Ti-6246 und die Schaufeln aus dem Werkstoff Ti-6242 oder Ti-6246 gebildet sein.

Gemäß der Erfindung weist die Scheibe ein lamellares Gefüge mit einer Mikrostruktur aus einer Vielzahl von nebeneinander liegenden Lamellen aus α- und β-Titan auf.

Weiterhin liegen die Schaufeln ein bimodales Gefüge aufweisen, bei dem gleichachsige Gefügebestandteile aus α-Titan und β-Titan vor.

Die Schaufeln werden durch das sogenannte Direkt-Hochfrequenz-Pressschweißverfahren an der Scheibe angeschweißt wobei bei dem Direkt-Hochfrequenz-Pressschweißverfahren hochfrequenter Strom durch die zu verbindenden Flächen, also die Fügeflächen der zu verschweißenden Bauteile, also der Schaufeln und der Scheibe geleitet wird. Dies kann beispielsweise durch Schaltung der zu verschweißenden Bauteile in Reihe in einem Stromkreis geschehen. Gleichzeitig werden die zu verschweißenden Bauteile in geringem Abstand zueinander angeordnet, so dass einerseits durch den Skin-Effekt beim Stromfluss und andererseits durch den Proximity-Effekt der nahe zueinander angeordneten Bauteile der Stromfluss auf die Oberflächenbereiche begrenzt wird, so dass dort durch den hochfrequenten Strom eine lokale Erwärmung und lokale Aufschmelzung der Fügeflächen erfolgt. Sobald die Fügeflächen ausreichend erwärmt sind werden die zu verschweißenden Bauteile aufeinander gepresst, so dass eine Verschweißung erfolgen kann.

Dieses Verfahren weist den Vorteil auf, dass es nur einen geringen Platzbedarf erfordert, da die Anordnung von Elektroden zur Einbringung des Stroms wenig Platz erfordert, im Vergleich beispielsweise zu induktiven Hochfrequenz-Pressschweißverfahren, bei dem eine entsprechende Induktionsspule zur Erzeugung von hochfrequenten Induktionsströmen erforderlich ist. Auch im Vergleich zum linearen Reibschweißen, welches häufig bei der Erzeugung von Blisken eingesetzt wird, ist beim direkten Hochfrequenz-Pressschweißen ein sehr viel geringer Platzbedarf erforderlich, so dass die Anwendung dieses Verfahrens für Blisken im Hochdruckverdichter möglich wird, bei denen durch die Vielzahl von Schaufeln mit kleinen Dimensionen ein geringer Bauraum zur Verfügung steht.

Durch das direkte Hochfrequenz-Pressschweißverfahren ergibt sich weiterhin der Vorteil, dass anders als beim linearen Reibschweißen keine relativ Bewegung der Fügeflächen zueinander erforderlich ist, was auch entsprechende Vorteile für die Gefügeausbildung im Schweißgefüge zur Folge hat, da lediglich eine lineare Pressbewegung senkrecht zu den Fügeflächen erforderlich ist. Dadurch werden Scherkräfte auf die oberflächennahen Gefügebereiche, wie beim linearen Reibschweißen vermieden, was entsprechend in der Mikrostruktur der Schweißverbindung vorteilhaft erkennbar ist.

Durch die lokale Begrenzung des Aufschmelzens der Fügeflächen können entsprechende Komponenten, also Schaufeln und Scheiben miteinander verschweißt werden, welche ein bereits fertig eingestelltes Gefüge aufweisen, da lediglich im eng begrenzten Fügebereich Auswirkungen auf die Mikrostruktur zu erwarten sind.

Eine Nachbearbeitung der Blisken kann lediglich dahingehend erfolgen, dass die Endkontur der Schaufeln durch entsprechend spanende Bearbeitung wie z. B. Fräsen hergestellt wird.

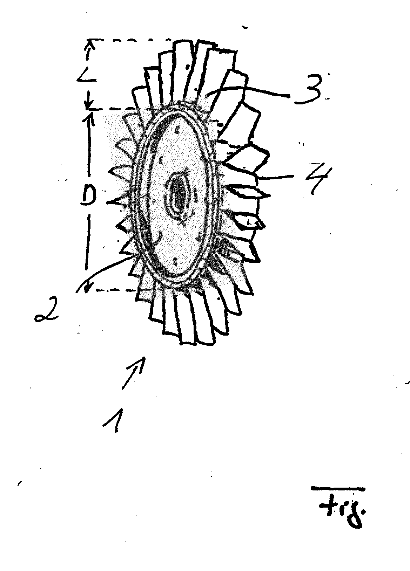

### KURZE BESCHREIBUNG DER FIGUR

Weitere Vorteile, Kennzeichen und Merkmale der vorliegenden Erfindung werden bei der nachfolgenden detaillierten Beschreibung eines Ausführungsbeispiels anhand der beigefügten Figur deutlich. Die Figur zeigt hierbei in rein schematischer Weise eine Ausführungsform einer Blisk gemäß der vorliegenden Erfindung.

### AUSFÜHRUNGSBEISPIEL

Die Figur zeigt eine perspektivische Darstellung einer sogenannten Blisk (Bladed Disc) wie sie als Rotor in einer Gasturbine und insbesondere in einem Hochdruckverdichter einer Gasturbine eingesetzt wird. Das Kennzeichen der Blisk 1 ist die integrale Ausbildung der Rotorschaufeln 3 auf der Scheibe 2. Der Vorteil einer Blisk besteht darin, dass auf die Verbindungselemente zwischen Schaufeln und Scheibe, als Schaufelfüße und Scheibennuten, verzichtet werden kann, so dass sich für die Scheibe geringere Randlasten und eine entsprechende Gewichtseinsparung ergeben. Allerdings wird durch die integrale Ausbildung von Schaufel und Scheibe 2, 3 die Auswahl der Werkstoffe und die Einstellung der Gefüge der Werkstoffe in den jeweiligen Bauteilen limitiert. Mit der vorliegenden Erfindung kann dieses Problem jedoch gelöst werden, so dass selbst bei Rotoren bzw. Laufrädern im Hochdruckverdichter, bei dem aufgrund der Vielzahl der Schaufeln 3 und der kleinen Dimension der Schaufeln 3 eine starke Einschränkung aufgrund des limitierten Bauraums gegeben ist, unterschiedliche Werkstoffe und/oder Werkstoffe mit unterschiedlichen Gefügeausbildungen für Schaufeln und Scheiben eingesetzt werden können.

Dies wird dadurch erreicht, dass die Schaufeln 3 auf die Scheibe 2 durch ein spezielles Verfahren aufgeschweißt werden, welches ermöglicht, dass in Bezug auf die bevorzugt einzusetzenden Titanwerkstoffe eine sichere Schweißverbindung 4 gewährleistet wird. Das entsprechende Schweißverfahren ist ein Pressschweißverfahren, bei dem die zu fügenden Bauteile mit ihren Fügeflächen, also die Schaufeln 3 mit den Schaufelfüßen 4 einerseits und die Scheibe 2 andererseits, nach Erwärmung und Aufschmelzen an den Fügeflächen aneinander gepresst werden. Das Aufschmelzen wird hierbei durch Einleiten eines hochfrequenten Stromes mit Frequenzen im Bereich von 0,75 MHz bis 2,5 MHz erreicht, so dass durch den sogenannten Skineffekt eine Aufschmelzung nur lokal im Bereich der Fügeflächen erzielt werden kann. Dies kann auch dadurch unterstützt werden, dass die Bauteile in einem sehr geringen Abstand von 0,5 mm bis 1 mm während der Erwärmungsphase, also während der Phase des Durchleitens des hochfrequenten Stromes, zueinander angeordnet werden, so dass durch den sogenannten Proximity-Effekt der Stromfluss und damit die Erwärmung sowie das Aufschmelzen auf die oberflächennahe Bereiche begrenzt wird. Dadurch ist es möglich, das eingestellte Gefüge der zu verschweißenden Bauteile, also der Schaufeln 3 und der Scheibe 2, weitgehend zu erhalten und lediglich einen schmalen Fügebereich mit Schweißgefüge zu erzeugen.

Durch das direkte Einleiten des hochfrequenten Stroms in die Fügeflächen, bei welchem die zu fügenden Bauteile, also Scheibe und Schaufel, in Reihe in einem Stromkreis geschaltet sein können, kann auf die Verwendung von Induktionsspulen verzichtet werden, so dass ein geringer Bauraum, wie er speziell bei Hochdruckverdichtern bzw. den entsprechenden Laufrädern vorliegt, ausreichend ist. Durch den geringen Bauraum, wie er bei Hochdruckverdichtern durch die geringen Dimensionen der Schaufeln und die enge Anordnung der Schaufeln gegeben ist, sind auch andere Schweißverfahren, wie Linearreibschweißen nicht möglich. Außerdem weist das erfindungsgemäß verwendete direkte Hochfrequenz-Pressschweißen den Vorteil auf, dass lediglich eine Bewegung der zu verschweißenden Bauteile senkrecht zu den Fügeflächen beim Anpressen erforderlich ist und keine Bewegung der Fügeflächen relativ zueinander, so dass dadurch auch die Gefügeausbildung verbessert wird.

Entsprechend ist es möglich auch bei Laufrädern bzw. Blisken im Hochdruckverdichterbereich einer Gasturbine integral beschaufelte Rotoren mit unterschiedlichen Werkstoffkombinationen und/oder unterschiedlichen Gefügeausbildungen einzusetzen.

Wie in der Figur gezeigt ist, ist die radiale Länge L der Schaufeln 3 im Hochdruckverdichter kleiner, insbesondere sehr viel kleiner als der Durchmesser D der Scheibe 2, was den geringen Bauraum verdeutlicht.

Der erfindungsgemäße Hochdruckverdichter weist Blisken auf, deren Scheiben 2 aus dem Titanwerkstoff Ti-6246 gebildet sind, wobei der Titanwerkstoff Ti-6246 6 Gew.-% Aluminium, 2 Gew.-% Zinn, 4 Gew.-% Zirkon und 6 Gew.-% Molybdän sowie Rest Titan und unvermeidbare Verunreinigungen enthält. Dieser Werkstoff liegt in einem lamellaren Gefüge vor, bei dem das Gefüge überwiegend aus Lamellen aus α- und β-Titan besteht.

Die Schaufeln können aus demselben Werkstoff, also TI-6246, gebildet sein, wobei die Schaufeln insbesondere mit einem bimodalen Gefüge mit gleichachsigen α- und β -Titan-Gefügebestandteilen ausgebildet sein können. Darüber hinaus können die Schaufeln 3 auch aus dem Titanwerkstoff Ti-6242 gebildet werden, welcher im Wesentlichen aus 6 Gew.-% Aluminium, 2 Gew.-% Zinn, 4 Gew.-% Zirkon und 2 Gew.-% Molybdän sowie dem Rest Titan und unvermeidbare Verunreinigungen besteht.

Derartige Blisken zeichnen sich durch ein ausgewogenes Eigenschaftsprofil speziell für die Anwendung im Hochdruckverdichterbereich eines Flugtriebwerks aus.

## Patentansprüche

1. Integral beschaufelter Rotor (1) mit einer Scheibe (2) und einer Vielzahl an der Scheibe durch Schweißen angeordneter Schaufeln (3), wobei der integral beschaufelte Rotor eine Scheibe (2) aus Ti-6246 und die Schaufeln aus Ti-6242 oder Ti-6246 umfasst,
**dadurch gekennzeictinet, dass**
sich die Werkstoffe der Scheibe (2) und der Schaufel (3) in der Mikrostruktur ihres Gefüges unterscheiden und
die Scheibe (2) ein lamellares Gefüge mit einer Mikrostruktur mit einer Vielzahl von nebeneinander liegenden Lamellen aus α - und β - Titan aufweist.

2. Integral beschaufelter Rotor (1) nach Anspruch 1,
**dadurch gekennzeichnet, dass**
die Schaufeln (3) ein bimodales Gefüge aufweisen, bei dem gleichachsige Gefügebestandteile aus α - und β - Titan vorliegen.

3. Integral baschaufelter Rotor (1) nach einem der Ansprüche 1 oder 2,
**dadurch gekennzeichnet, dass**
die Schaufeln (3) mittels eines durch hochfrequenten Strom unterstützten Pressschweißverfahrens an die Scheibe (2) angeschweißt sind, wobei der Strom durch die Fügeflächen geleitet wird und dort zur lokalen Aufschmelzung fühlt.

4. Verdichter, insbesondere Hochdruckverdichter einer Gasturbine mit mindestens einem integral beschaufelten Rotor (1) nach einem der Ansprüche 1 bis 3.

5. Verfahren zur Herstellung eines integral beschaufelten Rotors (1) insbesondere für einen Verdichter, **dadurch gekennzeichnet, dass** die Schaufeln (3) mittels eines durch hochfrequenten Strom unterstützten Pressschweißverfahrens an die Scheibe (2) geschweißt werden, wobei der Strom durch die Fügeflächen geleitet wird und dort zur lokalen Aufschmelzung führt, wobei
für die Schweißverbindung (4) eine Scheibe (2) bereit gestellt wird, die aus lamellarem Ti-6246 gebildet ist, und Schaufeln (3) ausgewählt werden, die aus Ti-6242 oder bimodalem Ti-6246 gebildet sind, wobei lamellares Ti-6246 ein lamellares Gefüge mit einer Mikrostruktur mit einer Vielzahl von nebeneinander liegenden Lamellen aus α - und β - Titan aufweist und bimodales Ti-6246 ein bimodales Gefüge aufweist, bei dem gleichachsige Gefügebestandteile aus α - und β - Titan vorliegen.

6. Gasturbine mit einem integral beschaufelten Rotor (1) nach einem der Ansprüche 1 bis 3.

## Claims

1. Integrally bladed rotor (1) having a disc (2) and a plurality of blades (3) arranged on the disc by welding, wherein the integrally bladed rotor comprise a disc (2) made from Ti-6246 and the blades made from Ti-6242 or Ti-6246,
**charaeterised in that**
the materials of the disc (2) and the blade (3) differ in the microstructure of their structure and the disc (2) has a lamellar structure having a microstructure having a plurality of lamellae which lie next to one another, made from α and β titaniurn.

2. Integrally bladed rotor (1) according to claim 1,
**characterised in that**
the blades (3) have a bimodal structure in which coaxial structural components made from α and β titanium are present.

3. Integrally bladed rotor (1) according to one of claims 1 or 2,
**characterised in that**
the blades (3) are welded onto the disc (2) by means of a pressure welding method supported by a high-frequency current, wherein the current is conducted through the joining surfaces and leads to local melting there.

4. Compressor in particular high-pressure compressor of a gas turbine having at least one integrally bladed rotor (1) according to one of claims 1 to 3.

5. Method for the production of an integrally bladed rotor (1), in particular for a compressor,
**characterised in that** the blades (3) are welded to the disc (2) by means of a pressure welding method supported by a high-frequency current,
wherein the current is conducted through the joining surfaces and leads to local melting there, wherein, for the welding connection (4), a disc (2) is provided which is formed from lamellar Ti-6246, and blades (3) are selected which are formed from Ti-6242 or bimodal Ti-6246,
wherein lamellar Ti-6246 has a lamellar structure having a microstructure having a plurality of lamellae made from α and β titanium which lie next to one another, and bimodal Ti-624 has a bimodal structure in which coaxial structural components made from α and β titanium are present.

6. Gas turbine having an integrally bladed rotor (1) according to one of claims 1 to 3.

## Revendications

1. Rotor aubagé intégral (1) comportant un disque (2) et une pluralité d'aubes (3) disposées sur le disque par soudage, le rotor aubagé intégral comprenant un disque (2) en Ti-6246 et les aubes étant en Ti-6242 ou en Tri-6246, **caractérisé en ce que** la microstructure des matières constituant le disque (2) et les aubes (3) est différente et **en ce que** le disque (2) a une structure lamellaire présentant une microstructure comprenant une pluralité de lamelles juxtaposées en titane alpha et bêta.

2. Rotor aubagé intégral (1) selon la revendication 1, **caractérisé en ce que** les aubes (3) ont une structure bimodale dans laquelle se trouvent des constituants structurels ayant le même axe en titane alpha et bêta.

3. Rotor aubagé intégral (1) selon l'une quelconque des revendications 1 ou 2, **caractérisé en ce que** les aubes (3) sont soudées sur le disque (2) au moyen d'un procédé de soudage par pression assisté par un courant haute fréquence, le courant passant à travers les faces à jointer et conduisant, à cet endroit, à une fusion localisée.

4. Compresseur, en particulier compresseur haute pression d'une turbine à gaz comportant au moins un rotor aubagé intégral (1) selon l'une quelconque des revendications 1 à 3.

5. Procédé de fabrication d'un rotor aubagé intégral (1) destiné, en particulier, à un compresseur, **caractérisé en ce que** les aubes (3) sont soudées sur le disque (2) au moyen d'un procédé de soudage par pression assisté par un courant haute fréquence, le courant passant à travers les faces à jointer et conduisant, à cet endroit, à une fusion localisée, procédé dans lequel un disque (2), constitué de Tri-6246 lamellaire est fourni pour la soudure (4), et les aubes (3) choisies sont en Tri-6242 ou en Ti-6246 bimodal, le Ti-6246 lamellaire ayant une structure lamellaire présentant une microstructure comprenant une pluralité de lamelles juxtaposées en titane alpha et bêta et le Ti-6246 bimodal ayant une structure bimodale dans laquelle se trouvent des constituants structurels ayant le même axe en titane alpha et bêta

6. Turbine à gaz équipée d'un rotor aubagé intégral (1) selon l'une quelconque des revendications 1 à 3.
